(19) Europäisches Patentamt
European Patent Office
Office européen des brevets

(11) **EP 3 787 815 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **19726549.9**

(22) Anmeldetag: **18.04.2019**

(51) Internationale Patentklassifikation (IPC):
**B22D 29/00** *(2006.01)*

(52) Gemeinsame Patentklassifikation (CPC):
**B22D 29/005**

(86) Internationale Anmeldenummer:
**PCT/AT2019/060131**

(87) Internationale Veröffentlichungsnummer:
**WO 2019/204842 (31.10.2019 Gazette 2019/44)**

(54) **VERFAHREN ZUM ENTKERNEN EINES GUSSTEILS**

METHOD FOR CORE REMOVAL FROM A CAST PART

PROCÉDÉ DE DÉNOYAUTAGE D'UNE PIÈCE COULÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2018   AT 503502018**

(43) Veröffentlichungstag der Anmeldung:
**10.03.2021   Patentblatt 2021/10**

(73) Patentinhaber: **Fill Gesellschaft m.b.H.
4942 Gurten (AT)**

(72) Erfinder: **SEHRSCHÖN, Harald
4924 Waldzell (AT)**

(74) Vertreter: **Burger, Hannes
Anwälte Burger & Partner
Rechtsanwalt GmbH
Rosenauerweg 16
4580 Windischgarsten (AT)**

(56) Entgegenhaltungen:
WO-A1-2017/208065     DE-A1-102014 221 897

**Beschreibung**

Die Erfindung betrifft ein Verfahren zum Entkernen eines Gußteils durch Zerstörung zumindest eines in einem Inneren des Gußteils befindlichen Kerns, gemäß dem Oberbegriff von Anspruch 1.

Weiters betrifft die Erfindung eine Vorrichtung zum Entkernen eines Gußteils durch Zerstören eines in einem Inneren des Gußteils befindlichen Kerns, wobei die Vorrichtung zumindest ein Energieübertragungsmittel zur Übertragung von zur Zerstörung des Kerns notwendiger Dissoziationsenergie auf den Gußteil, insbesondere einen Hammer und/oder Rüttel- und/oder Stoßvorrichtung, sowie zumindest eine Steuerung aufweist.

Unter Zerstören eines Kernes versteht man das Ausbilden von genügend großen Bruchbereichen um die entstehenden Bruchstücke aus dem Gußteil entfernen zu können. Vorteilhaft ist es, wenn der Kern zum überwiegenden Teil (z.B. 80% des Kernvolumens) Bruchbereiche ausbildet. Somit kann es zielführend sein, mehrere Energieübertragungen, beispielsweise mittels Hammerschlägen oder Stößen, auf den Kern auszuüben.

Darüber hinaus betrifft die Erfindung eine Software und ein Computerprogrammprodukt.

Bei Gießprozessen, bei welchen Formen mit Kernen, insbesondere Sandkernen, zum Einsatz kommen, kann es infolge von thermischen und mechanischen Belastungen des Kerns zu einer Veränderung des Kerns kommen. So kann es während des Gießprozesses beispielsweise zu einem Schmelzen oder Ändern der Eigenschaften von Kernmaterial und/oder der Binder kommen, wobei nach einer Erstarrung der Kernmaterialschmelze die mechanische Belastbarkeit des Kerns gegenüber seinem Ausgangszustand wesentlich erhöht sein kann. Was zur Folge haben kann, dass die für die Zerstörung des Kerns erforderliche Energie sehr hoch werden kann, wodurch Probleme bei dem Entkernungsprozess entstehen können, da ein zu geringer Energieeintrag nicht zu einer Zerstörung des Kernes und ein zu hoher Energieeintrag möglicherweise zu einer Zerstörung des Gußteils führen kann.

Einschlägige Verfahren zum Entkernen von Gußteilen sind aus der WO 2017/208065 A1 sowie der DE102014221897A1 bekannt geworden.

Es ist daher eine Aufgabe der vorliegenden Erfindung, die oben genannten Nachteile des Stands der Technik zu überwinden und den Entkernprozess vorhersagbarer und effizienter zu machen sowie zu gewährleisten, dass der Gußteil durch das Entkernen nicht zerstört wird.

Diese Aufgabe wird mit einem Verfahren der eingangs genannten Art erfindungsgemäß durch die Merkmale des kennzeichnenden Teils von Anspruch 1 gelöst.

Die erfindungsgemäße Lösung ermöglicht es unter anderem, eine Überbeanspruchung des Gußteils während des Entkernprozesses zu vermeiden und trotzdem eine Zerstörung des Kerns zu gewährleisten.

Bei einer weiteren Ausführungsform kann in Schritt i) die Ermittlung der erforderlichen Dissoziationsenergie zur Zerstörung des zumindest einen Kerns zumindest anhand zumindest einer Temperaturverteilung in dem zumindest einen Kern während eines Gießvorganges erfolgen. So kann beispielsweise bei einer höheren Temperatur als eine Umgebungstemperatur sowie bei einer Umgebungstemperatur die e Dissoziationsenergie ermittelt werden, welche den Gußteil nicht beschädigt.

Als besonders günstig hat es sich erwiesen, wenn der Kern ein Sandkern und/oder Salzkern ist, insbesondere ein anorganisch gebundener Sandkern und/oder Salzkern.

Eine besonders exakte Bestimmung der zur Zerstörung des Kerns erforderlichen Energie lässt sich dadurch erzielen, dass in Schritt i) die 1 erforderliche Dissoziationsenergie zur Zerstörung des Kerns mittels einer Gießprozess-Simulation berechnet wird.

Entsprechend einer bevorzugten Variante kann in Schritt i) mittels der Gießprozess-Simulation Eigenspannungen des Kernes und/oder des Gußteils berechnet werden.

Der Entkernvorgang lässt sich dadurch weiter optimieren, dass in Schritt i) mittels der Gießprozess-Simulation aus den Eigenspannungen des Kernes zumindest ein Bruchbereich ermittelt wird, entlang welchem der Kern mechanisch schwächer ausgebildet ist, als in anderen Bereichen des Kerns.

Um eine optimale Position für die Energieübertragung auf den Kern zu ermitteln, kann in Abhängigkeit von einer Geometrie des Gußteils und der Lage des zumindest einen Bruchbereichs zumindest eine Stelle auf dem Gußteil ermittelt werden, auf welche der zumindest eine Schlag ausgeübt wird oder mehrere Schläge ausgeübt werden.

Um eine Belastbarkeit des Gußteils zu ermitteln, kann in Schritt i) mittels der Gießprozess-Simulation die Verformungsenergie des Gußteils berechnet werden. In Abhängigkeit von der Temperatur kann sich die mechanische Belastbarkeit des Gußteils verändern.

Die oben genannte Aufgabe kann auch mit einer Vorrichtung der eingangs genannten Art erfindungsgemäß dadurch gelöst werden, dass die zumindest eine Steuerung dazu eingerichtet ist, anhand einer gemäß dem Verfahren nach einem der Ansprüche 1 bis 9 ermittelten Dissoziationsenergie zur Zerstörung des Kerns, eine Bewegung des Energieübertragungsmittels, insbesondere Hammers und/oder Rüttel- und/oder Stoßvorrichtung derart zu steuern, dass durch die Bewegung des Energieübertragungsmittels zumindest eine Energie, welche der zur Zerstörung des Kerns erforderlichen Dissoziationsenergie entspricht und kleiner als eine zur Verformung eines Materials des Gußkörpers erforderlichen Energie ist, auf den Gußteil übertragen ist.

Als besonders vorteilhaft hat es sich herausgestellt, wenn die einzubringende Dissoziationsenergie über die Anzahl der Schläge gesteuert wird. Zudem sei darauf hingewiesen, dass unter einem Hammer in diesem Dokument jede Art von mechanischer Belastungsvorrichtung verstanden wird.

Die eingangs genannte Aufgabe kann auch mit einer Software erfindungsgemäß dadurch gelöst werden, welche, wenn sie in einen Arbeitsspeicher eines Computers geladen ist, zumindest den Schritt i) gemäß dem Verfahren nach einem der Ansprüche 1 bis 9 ausführt, und wenn sie in den Arbeitsspeicher der Steuerung (5) der Vorrichtung nach Anspruch 10 geladen ist, auch den Schritt ii) gemäß dem Verfahren nach Anspruch 1 steuert.

Die der Erfindung zugrundeliegende Aufgabenstellung kann auch mit einem Computerprogrammprodukt gelöst werden, welches auf einem computerlesbaren Medium gespeichert ist und zumindest einen Softwarecode zur Ausführung des Schrittes i) des Verfahrens nach einem der Ansprüche 1 bis 9 umfasst und zumindest einen Softwarecode zur Steuerung des Verfahrensschrittes ii) gemäß Anspruch 1 aufweist.

Zum besseren Verständnis der Erfindung wird diese anhand der nachfolgenden Figuren näher erläutert.

Es zeigen jeweils in stark vereinfachter, schematischer Darstellung:

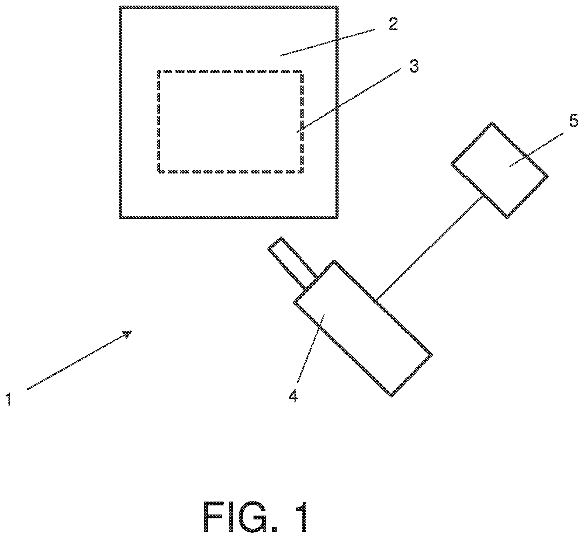

Fig. 1 ein Blockschaltbild einer erfindungsgemäßen Vorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Gemäß Fig. 1 weist eine erfindungsgemäße Vorrichtung 1 zum Zerstören eines Kernes 3 eines Gußteils 2 eine Energieübertragungsvorrichtung, beispielsweise einen oder mehrere Hämmer 4, sowie eine Steuerung 5, beispielsweise einen entsprechend programmierten Mikro- oder Signalprozessor, auf. Bei dem Kern 3 handelt es sich bevorzugt um einen Sandkern. Zusätzlich oder alternativ zur Verwendung eines oder mehrerer Hämmer 4 können beispielsweise auch Rüttelvorrichtungen oder kombinierte Rüttel-/Stoßvorrichtungen verwendet werden. In weiterer Folge wird aus Gründen der einfacheren Lesbarkeit ohne Beschränkung der Allgemeinheit nur auf den Hammer 4 Bezug genommen, wobei an dieser Stelle nochmals darauf hingewiesen sein soll, dass unter einem Hammer in dem vorliegenden Zusammenhang jede Art von Vorrichtung zur mechanischen Belastung des Gußteils 2 verstanden wird.

Die Steuerung 5 ist dazu eingerichtet, anhand einer ermittelten Dissoziationsenergie, die zur Zerstörung des Kerns 3 erforderlich ist, eine Bewegung des Hammers 4 derart zu steuern, dass durch die Bewegung des Hammers 4 gegen eine Außenseite des Gußteils 2 zumindest eine Energie, welche der zur Zerstörung des Kerns 3 erforderlichen Dissoziationsenergie entspricht und kleiner als eine zur Verformung eines Materials des Gußteils 2 erforderlichen Energie ist auf den Gußteil 2 übertragen wird.

Die Steuerung 5 ist auch dazu eingerichtet, die zum Zertrümmern des Kerns 3 erforderliche Dissoziationsenergie zu ermitteln.

Gemäß dem erfindungsgemäßen Verfahren wird in einem Schritt i) die zum Zertrümmern des Kerns 3 erforderliche Dissoziationsenergie ermittelt. In einem Schritt ii) wird zumindest eine Energie, welche der in Schritt i) ermittelten Dissoziationsenergie entspricht, über zumindest einen Schlag auf eine Außenseite des Gußteils 2 auf den Kern 3 übertragen.

Die Ermittlung der Dissoziationsenergie zur Zerstörung des Kerns 3 erfolgt unter Berücksichtigung einer Schrumpfung eines den Gußteil 2 bildenden Materials während eines Erstarrungsvorganges des Materials. Aus der Schrumpfung des Materials wird eine Volumenänderung des Gußteils 2 während des Erstarrungsvorganges ermittelt und anhand der Volumenänderung wird eine Bindungsenergie des Kerns 3 ermittelt. Zur Ermittlung der Bindungsenergie wird ein während der Schrumpfung des Materials, aus welchem der Gußteils 2 gebildet ist, von dem Material auf den Kern 3 ausgeübter Druck bestimmt und unter zumindest anhand zumindest einer Druckverteilung in dem Kern während der Schrumpfung des Materials die Bindungsenergie des Kerns 3 berechnet.

Die hier gemachten Überlegungen gehen davon aus, dass während des Gießvorganges auf den Kern übertragene Energie zu einer Erhöhung von dessen innerer Energie führen und die beim Abkühlen des Kerns nicht wieder abgegebene Energie in Bindungsenergie umgewandelt wird, wodurch sich die mechanische Belastbarkeit des Kerns 3 erhöht. Vereinfacht gesagt entspricht die Erhöhung der inneren Energie des Kernes infolge des Gießprozesses

$$\Delta U = Q + W \quad (Gl.\ 1)$$

einer Erhöhung der Bindungsenergie des Kernes 3. In Gl. 1 entspricht ΔU der Erhöhung der inneren Energie, Q der während des Gießprozesses von dem Kern 3 aufgenommenen abzüglich der wieder abgegebenen Wärme, W der mechanischen Arbeit, die durch eine Schrumpfung des Materials des Gußteils 2 auf den Kern 3 übertragen wird.

Für die mechanische Arbeit gilt

$$\int_{V1}^{V2} p(V) \, dV \quad \text{(Gl. 2)}$$

In Gleichung 2 entspricht die Differenz der Volumen V1 und V2 der Volumenänderung des Gußteils während dessen Schrumpfung während p(V) den von dem Volumen abhängigen Druck bzw. die von dem Volumen abhängige Druckverteilung in dem Kern wiedergibt.

Die Ermittlung des Terms Q in Gl.1 kann aus Materialkonstanten, beispielsweise der entsprechenden Wärmekapazitäten, etc. für das verwendete Material des Kerns und über eine Berechnung der Temperaturverteilung über den Kern 3 während des Gießprozesses ermittelt werden, beispielsweise über eine Berechnung mittels finiter Elemente Methode. Die Dissoziationsenergie kann für unterschiedliche Temperaturen, bei welchen die Entkernung erfolgen soll berechnet werden. Beispielsweise kann die Dissoziationsenergie bei einer höheren Temperatur als eine Umgebungstemperatur und/oder bei Umgebungstemperatur ermittelt werden. Der Kern 3 kann in ein Gitter aus Zellen gleicher oder unterschiedlicher Größe und Form unterteilt werden, wobei eine für den gesamten Kern 3 ermittelte Zunahme der Bindungsenergie auf die einzelnen Zellen des Gitters aufgeteilt werden kann. Die den einzelnen Zellen zugeteilten lokalen Bindungsenergien können durch Korrekturfaktoren, welche lokalen Begebenheiten der einzelnen Zellen Rechnung tragen angepasst werden. So können beispielsweise Eigenspannungen und thermische Verhältnisse während des Gießprozesses berücksichtigt werden. Aus der Bindungsenergie bzw. der korrigierten Bindungsenergie wird die erforderliche Dissoziationsenergie berechnet. Für eine vollständige Zerstörung bzw. Rückführung des Kerns 3 in seinen Ausgangszustand vor dem Gießprozess müsste die gesamte während des Gießprozesses aufgenommene innere Energie und in Bindungsenergie umgewandelte Energie wieder zugeführt werden. Allerdings ist es in vielen Fällen nicht erforderlich, dass der Kern 3 in diesem Ausmaß zerstört wird, so kann es durchaus ausreichend sein, den Kern 3 in größere Teilstücke zu zerschlagen.

Als besonders geeignet zur Berechnung der erforderlichen Dissoziationsenergie zur Zerstörung des Kerns hat sich die Verwendung einer sogenannten Gießprozess-Simulation herausgestellt. Bei einer Gießprozess-Simulation handelt es sich um ein Computer-Programm, mit welchem die einzelnen Komponenten, beispielsweise Kern und Gußteil und deren Verhalten während des Gießprozesses modelliert werden können.

Derartige Programme sind dem Fachmann in großer Zahl bekannt, weshalb an dieser Stelle nicht näher darauf eingegangen werden soll.

Aus der Gießprozess-Simulation kann beispielsweise unter Zugrundelegung eines entsprechenden 3-D Modells des Kerns 3 und des Gußkörpers 2 mittels der Methode Finiter- Elemente Eigenspannungen des Kerns 3 und/oder des Gußteils 2 berechnet werden. In weiterer Folge können anhand der ermittelten lokalen Bindungsenergien auch die entsprechende für die Dissoziation des Kerns erforderliche Energie berechnet werden. Mittels der Gießprozess-Simulation lässt sich auch Verformungsenergie des Gußteils 2 bzw. dessen mechanische Belastbarkeit berechnen.

Weiters kann aus den Eigenspannungen des Kernes 3 zumindest ein Bruchbereich ermittelt werden, entlang welchem der Kern 3 mechanisch schwächer ausgebildet ist, als in anderen Bereichen des Kerns 3. Die Kenntnis eines derartigen Bruchbereichs ist von Vorteil um die zur Zerstörung des Kerns 3 erforderliche Energie minimieren zu können. Vorteilhaft ist es, die notwendige Dissoziationsenergie zu bestimmen, die zum Ausbilden von genügend großen Bruchbereichen des Kernvolumens erforderlich ist, um ein Ausfördern der resultierenden Bruchstücke aus dem Gussteil zu ermöglichen.

In Abhängigkeit von einer Geometrie des Gußteils und der Lage der Bruchbereiche können auch eine oder mehrere Stellen auf dem Gußteil 2 ermittelt werden, welche besonders gut geeignet sind, einen Schlag mit dem Hammer 4 aufzunehmen. Eine derartige Stelle kann sich zum einen durch eine besondere Nähe zu dem Bruchbereich und zum anderen durch eine besondere Eignung für die Energieaufnahme durch die lokale Ausbildung des Gußteils 2 auszeichnen. So kann der Gußteil 2 im Bereich der oben genannten Stelle eine lokal erhöhte Verformungsfestigkeit, beispielsweise aufgrund von Materialdicke, geometrischer Ausbildung, etc. aufweisen. An dieser Stelle sei darauf hingewiesen, dass unter Bruchbereichen in dem vorliegenden Zusammenhang Flächen oder zumindest kleine Volumen verstanden werden.

Die in Schritt ii) übertragene Energie soll unter einer zur Verformung des Gußteils 2 erforderlichen Verformungsenergie liegen, um Beschädigungen des Gußteils 2 zu verhindern. Mittels der erfindungsgemäßen Lösung ist es möglich, die Eigenschaften des Kernes 3 und sein Verhalten während des Entkernens vorherzusagen und so schon zu einem frühen Zeitpunkt erkennen zu können, ob sich eine vorgegebene Kombination aus Kern 3 und Gußteil 2 ohne Beschädigung des Gußteils 2 entkernen lässt.

Zur Durchführung des erfindungsgemäßen Verfahrens eignet sich insbesondere eine Software, mit welcher die Berechnung der erforderlichen Dissoziationsenergie sowie die entsprechende Prozessmodellierung durchgeführt werden können. Diese Software kann Teil eines Computerprogrammproduktes sein und als auf einem Datenspeicher gespeicherter Code vorliegen.

Weiters kann die Software, wenn sie in einen Arbeitsspeicher der Steuerung 5 geladen ist, die Steuerung der Bewegung des Hammers 4 durchführen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

1    Vorrichtung
2    Gußteil
3    Kern
4    Hammer
5    Steuerung

**Patentansprüche**

1.  Verfahren zum Entkernen eines Gußteils (2) durch Zerstören zumindest eines in einem Inneren des Gußteils (2) befindlichen Kerns (3), wobei

    in einem Schritt i) eine zum Zerstören des Kerns (3) erforderliche Dissoziationsenergie ermittelt wird, wobei in einem Schritt ii) zumindest eine Energie, welche der in Schritt i) ermittelten Dissoziationsenergie entspricht, über den Gußteil (2) auf den Kern (3) übertragen wird, wobei die in Schritt ii) übertragene Energie unter einer zur Verformung des Gußteils (2) erforderlichen Verformungsenergie liegt, wobei in Schritt i) die Ermittlung der erforderlichen Dissoziationsenergie zur Zerstörung des zumindest einen Kerns (3) unter Berücksichtigung einer Schrumpfung eines den Gußteil (2) bildenden Materials während eines Erstarrungsvorganges des Materials erfolgt, wobei in Schritt i) aus der Schrumpfung des Materials eine Volumenänderung des Gußteils (2) während des Erstarrungsvorganges ermittelt und zumindest anhand der Volumenänderung eine Bindungsenergie des Kerns (3) ermittelt wird,
    wobei in Schritt i) zumindest ein während der Schrumpfung des Materials, aus welchem das Gußteil (2) gebildet ist, von dem Material auf den Kern (3) ausgeübter Druck bestimmt und anhand zumindest einer Druckverteilung in dem Kern während der Schrumpfung des Materials die Bindungsenergie des Kerns (3) berechnet wird, wobei in Schritt i) die erforderliche Dissoziationsenergie zur Zerstörung des Kerns (3) aus der Bindungsenergie des Kerns (3) berechnet wird.

2.  Verfahren nach Anspruch 1, wobei in Schritt i) die Ermittlung der erforderlichen Dissoziationsenergie zur Zerstörung des zumindest einen Kerns (3) anhand zumindest einer Temperaturverteilung in dem zumindest einen Kern (3) während eines Gießvorganges erfolgt.

3.  Verfahren nach Anspruch 1 oder 2, **dadurch gekennzeichnet, dass** der Kern (3) ein Sandkern ist.

4.  Verfahren nach einem der Ansprüche 1 bis 3, **dadurch gekennzeichnet, dass** in Schritt i) die erforderliche Dissoziationsenergie zur Zerstörung des Kerns (3) mittels einer Gießprozess-Simulation berechnet wird.

5.  Verfahren nach Anspruch 4, **dadurch gekennzeichnet, dass** in Schritt i) mittels der Gießprozess-Simulation Eigenspannungen des Kernes (3) und/oder des Gußteils (2) berechnet werden.

6.  Verfahren nach Anspruch 5, **dadurch gekennzeichnet, dass** in Schritt i) mittels der Gießprozess-Simulation aus den Eigenspannungen des Kernes (3) zumindest ein Bruchbereich ermittelt wird, entlang welcher der Kern (3) mechanisch schwächer ausgebildet ist, als in anderen Bereichen des Kerns (3).

7.  Verfahren nach Anspruch 6, **dadurch gekennzeichnet, dass** in Abhängigkeit von einer Geometrie des Gußteils und der Lage des zumindest einen Bruchbereichs zumindest eine Stelle auf dem Gußteil (2) ermittelt wird, über welche ein Energieeintrag auf den Gußteil erfolgt.

8.  Verfahren nach einem der Ansprüche 4 bis 7, **dadurch gekennzeichnet, dass** in Schritt i) mittels der Gießprozess-Simulation die Verformungsenergie des Gußteils (2) berechnet wird.

9.  Verfahren nach einem der Ansprüche 1 bis 8, **dadurch gekennzeichnet, dass** die Dissoziationsenergie bei einer höheren Temperatur als eine Umgebungstemperatur und/oder bei Umgebungstemperatur ermittelt wird.

10. Vorrichtung (1) zum Entkernen eines Gußteils (2) durch Zerstören eines in einem Inneren des Gußteils (2) befindlichen Kerns (3), wobei die Vorrichtung zumindest ein Energieübertragungsmittel zur Übertragung von zur Zerstörung des Kerns (3) notwendiger Dissoziationsenergie auf den Gußteil (2), insbesondere einen Hammer (4) und/oder Rüttel- und/oder Stoßvorrichtung, sowie zumindest eine Steuerung (5) aufweist, wobei die Steuerung (5) dazu eingerichtet ist, die zum Zertrümmern des Kerns (3) erforderliche Dissoziationsenergie zu ermitteln und, anhand einer gemäß dem Verfahren nach einem der Ansprüche 1 bis 9 ermittelten Dissoziationsenergie zur Zerstörung des Kerns (3), eine Bewegung des Energieübertragungsmittels, insbesondere Hammers (4) und/oder Rüttel- und/oder Stoßvorrichtung, derart zu steuern, dass durch die Bewegung des Energieübertragungsmittels zumindest eine Energie, welche der zur Zerstörung des Kerns (3) erforderlichen Dissoziationsenergie entspricht und kleiner als eine zur Verformung eines Materials des Gußteils (2) erforderlichen Energie ist, auf den Gußteil (2) übertragen ist.

11. Software, welche wenn sie in einen Arbeitsspeicher eines Computers geladen ist, zumindest den Schritt i) gemäß dem Verfahren nach einem der Ansprüche 1 bis 9 ausführt, und wenn sie in den Arbeitsspeicher der Steuerung (5) der Vorrichtung nach Anspruch 10 geladen ist, auch den Schritt ii) gemäß dem Verfahren nach Anspruch 1 steuert.

12. Computerprogrammprodukt, welches auf einem computerlesbaren Medium gespeichert ist und zumindest einen Softwarecode zur Ausführung des Schrittes i) des Verfahrens nach einem der Ansprüche 1 bis 9 umfasst, und zumindest einen Softwarecode zur Steuerung des Verfahrensschrittes ii) gemäß Anspruch 1 aufweist.


**Claims**

1. A method for removing the core from a cast part (2) by destroying at least one core (3) located inside the cast part (2), wherein

   in a step i), a dissociation energy required for destroying the core (3) is determined, wherein, in a step ii), at least an energy equivalent to the dissociation energy determined in step i) is transmitted to the core (3) via the cast part (2), wherein the energy transmitted in step ii) is lower than a deformation energy required for deforming the cast part (2), wherein, in step i), the dissociation energy required for destroying the at least one core (3) is determined taking into account a shrinkage of the material forming the cast part (2) during the solidification process of the material, wherein, in step i), a change in volume of the cast part (2) during the solidification process is determined from the shrinkage of the material, and a binding energy of the core (3) is determined at least on the basis of the change in volume,
   wherein, in step i), at least a pressure exerted on the core (3) by the material during the shrinking of the material the cast part (2) is formed of is determined, and the binding energy of the core (3) is calculated on the basis of at least a pressure distribution in the core during the shrinking of the material, wherein, in step i), the dissociation energy required for destroying the core (3) is calculated from the binding energy of the core (3).

2. The method according to claim 1, wherein, in step i), the dissociation energy required for destroying the at least one core (3) is determined on the basis of at least a temperature distribution in the at least one core (3) during the casting process.

3. The method according to claim 1 or 2, **characterized in that** the core (3) is a sand core.

4. The method according to one of claims 1 to 3, **characterized in that**, in step i), the dissociation energy required for destroying the core (3) is calculated by means of a casting process simulation.

5. The method according to claim 4, **characterized in that**, in step i), internal stresses of the core (3) and/or the cast part (2) are calculated by means of the casting process simulation.

6. The method according to claim 5, **characterized in that**, in step i), at least one breakage area is determined by means of the casting process simulation from the internal stresses of the core (3), along which breakage area the core (3) is mechanically weaker than in other areas of the core (3).

7. The method according to claim 6, **characterized in that**, depending on a geometry of the cast part and the location of the at least one breakage area, at least one point on the cast part (2) is determined via which the energy is introduced to the cast part.

8. The method according to one of claims 4 to 7, **characterized in that**, in step i), the deformation energy of the cast part (2) is calculated by means of the casting process simulation.

9. The method according to one of claims 1 to 8, **characterized in that** the dissociation energy is determined at a temperature higher than an ambient temperature and/or at ambient temperature.

10. A device (1) for removing the core from a cast part (2) by destroying a core (3) located inside the cast part (2), wherein the device has at least one energy transmission means, in particular a hammer (4) and/or vibrating and/or impact device, for transmitting dissociation energy required for destroying the core (3) to the cast part (2) as well as at least one controller (5), wherein the controller (5) is configured to determine the dissociation energy required for destroying the core (3) and to control a movement of the energy transmission means, in particular the hammer (4) and/or vibration and/or impact device, on the basis of the dissociation energy for destroying the core (3), determined according to the method according to one of claims 1 to 9, such that due to the movement of the energy transmission means, at least an energy equivalent to the dissociation energy required for destroying the core (3) and smaller than an energy required for deforming a material of the cast part (2) is transmitted to the cast part (2).

11. A software, which, when it is installed in a working memory of a computer, performs at least step i) according to the method according to one of claims 1 to 9 and, when it is installed in the working memory of the controller (5) of the device according to claim 10, also controls step ii) according to the method according to claim 1.

12. A computer program product, which is stored on a computer-readable medium and comprises at least a software code for performing step i) of the method according to one of claims 1 to 9 and has at least a software code for controlling the method step ii) according to claim 1.

**Revendications**

1. Procédé de dénoyautage d'une pièce coulée (2) par la destruction d'un noyau (3) se trouvant à l'intérieur d'une pièce coulée (2), dans lequel

dans une étape i), une énergie de dissociation nécessaire pour la destruction du noyau (3) est déterminée, dans lequel, dans une étape ii), au moins une énergie, qui correspond à l'énergie de dissociation déterminée à l'étape i), est transmise par l'intermédiaire de la pièce coulée (2) au moyeu (3), dans lequel l'énergie transmise à l'étape ii) se trouve en dessous d'une énergie de déformation nécessaire pour la déformation de la pièce coulée (2), dans lequel, dans l'étape i), la détermination de l'énergie de dissociation nécessaire pour la destruction de l'au moins un noyau (3) a lieu en tenant compte d'un rétrécissement d'un matériau constituant la pièce coulée (2) pendant un processus de solidification du matériau, dans lequel, dans l'étape i), à partir du rétrécissement du matériau, une variation de volume de la pièce coulée (2) pendant le processus de solidification est déterminée et, au moins à l'aide de la variation de volume, une énergie de liaison du noyau (3) est déterminée, dans lequel, dans l'étape i), au moins une pression exercée par le matériau sur le noyau (3), pendant le rétrécissement du matériau à partir duquel la pièce coulée (2) est formée, est déterminée et, à l'aide d'au moins une répartition de la pression dans le noyau pendant le rétrécissement du matériau, l'énergie de liaison du noyau (3) est calculée, dans lequel, dans l'étape i), l'énergie de dissociation nécessaire pour la destruction du noyau (3) est calculée à partir de l'énergie de liaison du noyau (3).

2. Procédé selon la revendication 1, dans lequel, dans l'étape i), la détermination de l'énergie de dissociation nécessaire pour la destruction de l'au moins un noyau (3) a lieu à l'aide d'au moins une répartition des températures dans l'au moins un noyau (3) pendant le processus de coulage.

3. Procédé selon la revendication 1 ou 2, **caractérisé en ce que** le noyau (3) est un noyau de sable.

4. Procédé selon l'une des revendications 1 à 3, **caractérisé en ce que**, dans l'étape i), l'énergie de dissociation nécessaire pour la destruction du noyau (3) est calculée au moyen d'une simulation de processus de coulage.

5. Procédé selon la revendication 4, **caractérisé en ce que**, dans l'étape i), au moyen de la simulation de processus de coulage, les tensions internes du noyau (3) et/ou de la pièce coulée (2) sont calculées.

6. Procédé selon la revendication 5, **caractérisé en ce que**, dans l'étape i), au moyen de la simulation de processus de coulage, à partir des tensions internes du noyau (3), au moins une zone de rupture est déterminée, le long de laquelle le noyau (3) est réalisé de manière plus faible mécaniquement que dans d'autres parties du noyau (3).

7. Procédé selon la revendication 6, **caractérisé en ce que**, en fonction d'une géométrie de la pièce coulée et de la position de l'au moins une zone de rupture, au moins un endroit est déterminé sur la pièce coulée (2), par lequel a lieu un apport d'énergie sur la pièce coulée.

8. Procédé selon l'une des revendications 4 à 7, **caractérisé en ce que**, dans l'étape i), au moyen de la simulation du processus de coulage, l'énergie de déformation de la pièce coulée (2) est calculée.

9. Procédé selon l'une des revendications 1 à 8, **caractérisé en ce que** l'énergie de dissociation est déterminée à une température supérieure à une température ambiante et/ou à température ambiante.

10. Dispositif (1) de dénoyautage d'une pièce coulée (2) par destruction d'un noyau (3) se trouvant à l'intérieur de la pièce coulée (2), dans lequel le dispositif comprend au moins un moyen de transmission d'énergie pour la transmission de l'énergie de dissociation nécessaire pour la destruction du noyau (3) à la pièce coulée (2), plus particulièrement un marteau (4) et/ou un dispositif vibrant et/ou un dispositif de choc, ainsi qu'au moins une commande (5), dans lequel la commande (5) est conçue pour déterminer l'énergie de dissociation nécessaire pour briser le noyau (3) et, à l'aide d'une énergie de dissociation pour la destruction du noyau (3), déterminée selon le procédé selon l'une des revendications 1 à 9, et pour contrôler un déplacement du moyen de transmission d'énergie, plus particulièrement du marteau (4) et/ou du dispositif vibrant et/ou du dispositif de choc, de façon à ce que, du fait du déplacement du moyen de transmission d'énergie, au moins une énergie, qui correspond à l'énergie de dissociation nécessaire pour la destruction du noyau (3) et inférieure à une énergie nécessaire à la déformation d'un matériau de la pièce coulée (2), est transmise à la pièce coulée (2).

11. Logiciel qui, lorsqu'il est chargé sur une mémoire de travail d'un ordinateur, exécute au moins l'étape i) selon le procédé selon l'une des revendications 1 à 9 et, lorsqu'il est chargé dans la mémoire de travail de la commande (5) du dispositif selon la revendication 10, contrôle également l'étape ii) selon le procédé selon la revendication 1.

12. Produit de programme informatique qui est enregistré sur un support lisible par un ordinateur et comprend au moins un code de logiciel pour l'exécution de l'étape i) du procédé selon l'une des revendications 1 à 9 et comprend au moins un code de logiciel pour le contrôle de l'étape ii) selon la revendication 1.

# FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017208065 A1
- DE 102014221897 A1